(19) Europäisches Patentamt
European Patent Office
Office européen des brevets

(11) Veröffentlichungsnummer: **0 390 740 A1**

# (12) EUROPÄISCHE PATENTANMELDUNG

(21) Anmeldenummer: **90810224.7**

(51) Int. Cl.5: **A01N 47/12, A01N 47/10**

(22) Anmeldetag: **21.03.90**

(30) Priorität: **30.03.89 CH 1162/89**

(43) Veröffentlichungstag der Anmeldung: **03.10.90 Patentblatt 90/40**

(84) Benannte Vertragsstaaten: **AT BE CH DE DK ES FR GB IT LI NL**

(71) Anmelder: **CIBA-GEIGY AG**
**Klybeckstrasse 141**
**CH-4002 Basel(CH)**

(72) Erfinder: **Karrer, Friedrich, Dr.**
**Rebbergstrasse 5**
**CH-4800 Zofingen(CH)**
Erfinder: **Rindlisbacher, Alfred**
**Lachmattstrasse 69/3**
**CH-4132 Muttenz(CH)**

## (54) Schädlingsbekämpfung.

(57) Verwendung des 2-[4-(3,5-Difluorphenoxy)-phenoxy]-äthylcarbaminsäureäthylesters zur Bekämpfung von pflanzenschädigenden Insekten der Familien Aleyrodidae, Diaspididae, Coccidae, Tortricidae und Olethreutidae.

EP 0 390 740 A1

## Schädlingsbekämpfung

Die vorliegende Erfindung betrifft die Verwendung des 2-[4-(3,5-Difluorphenoxy)-phenoxy]-äthylcarbaminsäure-äthylesters zur Bekämpfung von pflanzenschädigenden Insekten der Familien Aleyrodidae, Diaspididae, Coccidae, Tortricidae und Olethreutidae. Der erfindungsgemäss verwendete Carbaminsäureester ist besonders geeignet zur Bekämpfung von pflanzenschädigenden Vertretern aus folgenden Familien: aus der Familie Aleyrodidae die Arten Bemisia tabaci und Trialeurodes vaporariorum, aus den Familien Diaspididae und Coccidae die Gattungen Aonidiella, Quadraspidiotus, Parlatoria bzw. die Gattungen Saissetia und Coccus, aus der Familie Tortricidae die Gattung Adoxophyes und aus der Familie Olethreutidae die Gattungen Cydia und Lobesia.

Aus der EP-Anmeldung Nr. 0 004 334 ist die Herstellung von an der Phenoxy-Gruppe monosubstituierten 2-(4-Phenoxyphenoxy)-äthylcarbaminsäure-alkylestern und deren Verwendung zur Bekämpfung pflanzenschädigender Insekten bekannt. Weiterhin werden in der GB-PS Nr. 2 084 574 2-[4-(Phenoxy)-phenoxy]-äthylcarbaminsäureester beschrieben, die am N-Atom oder der 2-Stellung der Aethylengruppe alkylsubstituiert sind und unter anderem als Insektizide zur Bekämpfung von pflanzenschädigenden Lepidopteren und Homopteren wirksam sein sollen. In der US-PS Nr. 4 608 389 werden 2-[4-(3,5-Difluorphenoxy)-phenoxy]-äthylcarbaminsäure-alkylest er als Insektizide vorgeschlagen, unter anderem auch der erfindungsgemäss verwendete 2-[4-(3,5-Difluorphenoxy)-phenoxy]-äthylcarbaminsäure-äthylester.

Demgegenüber wurde nun überraschenderweise gefunden, dass insbesondere der aus der US-PS Nr. 4 608 389 an sich bekannte 2-[4(3,5-Difluorphenoxy)-phenoxy]-äthylcarb-aminsäure-äthylester speziell hohe Wirksamkeit bei der Bekämpfung von bestimmten pflanzenschädigenden Insekten besitzt. Diese Verbindung eignet sich zur Bekämpfung der schwierig zu kontrollierenden Weissen Fliegen (Familie Aleyrodidae, umfassend z.B. die Gattungen Bemisia und Trialeurodes mit den wichtigen Schädlingsarten Bemisia tabaci resp. Trialeurodes vaporarium), zur Bekämpfung von Schildläusen der Familien Diaspididae und Coccidae (einschliessend z.B. die wichtigen Gattungen Aonidiella, Quadraspidiotus, Parlatoria resp. z.B. die Gattungen Saissetia und Coccus), zur Bekämpfung von Raupenschädlingen im Obstbau der Familie Tortricidae (einschliessend z.B. die wichtige Gattung Adoxophyes) und der Familie Olethreutidae (einschliessend z.B. die wichtigen Gattungen Cydia und Lobesia). Besonders hervorzuheben ist die Eignung des erfindungsgemäss verwendeten Carbaminsäureesters zur Bekämpfung der Insektenspezies Bemisia tabaci, Trialeurodes vaporarium, Aonidiella aurantii, Quadraspidiotus perniciosus, Cydia pomonella, Adoxophyes reticulana und Lobesia botrana.

Der erfindungsgemäss verwendete 2-[4-(3,5-Difluorphenoxy)-phenoxy]-äthylcarbaminsäure-äthylester ist gegenüber den vorerwähnten Schädlingen im wesentlichen als Chemosterilant, Ovizid und Populations- bzw. Metamorphosehemmer wirksam.

Der erfindungsgemäss verwendete Carbaminsäureester kann analog dem in der US-PS Nr. 4 608 389 beschriebenen Verfahren hergestellt werden (vgl. das nachstehende Beispiel 1):

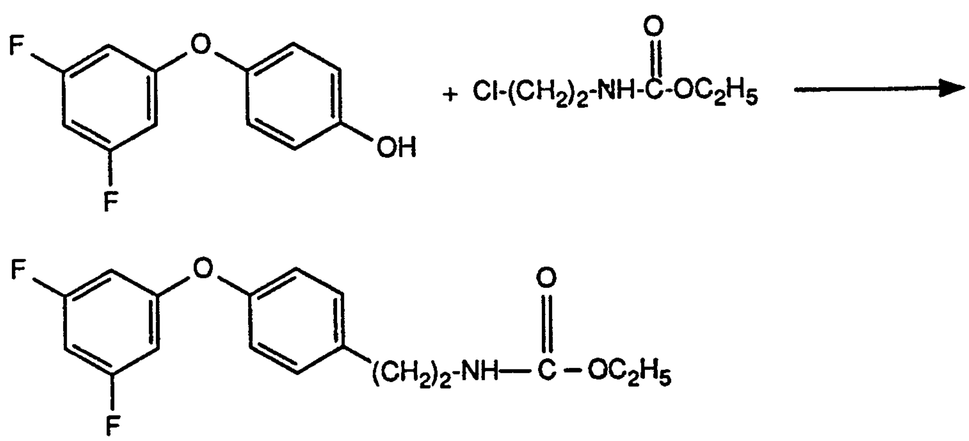

Die insektizide Wirkung des 2-[4-(3,5-Difluorphenoxy)-phenoxy]-äthylcarbaminsäureäthylesters lässt sich durch Zusatz von anderen Insektiziden und/oder Akariziden wesentlich verbreitern und an gegebene Umstände anpassen. Als Zusätze eignen sich z.B. org. Phosphorverbindungen; Nitrophenole und deren Derivate; Formamide; Harnstoffe; pyrethrinartige Verbindungen sowie Carbamate und chlorierte Kohlenwasserstoffe.

Die gute pestizide Wirkung des 2-[4-(3,5-Difluorphenoxy)-phenoxy]-äthylcarbaminsäure-äthylesters entspricht einer erzielten Abtötungsrate (Mortalität) von mindestens 50-60 % der erwähnten zu bekämpfenden Schadinsekten.

Der erfindungsgemäss verwendete 2-[4(3,5-Difluorphenoxy)-phenoxy]-äthylcarbaminsäure-äthylester wird in unveränderter Form oder vorzugsweise zusammen mit den in der Formulierungstechnik üblichen Hilfsmitteln eingesetzt und wird daher z.B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die erfindungsgemäss zu verwendenden Formulierungen, d.h. die den insektiziden Wirkstoff und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyl-äther, Essigester, Propylmyristat oder Propylpalmitat, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl; Silikonöle oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen, wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art der angestrebten Formulierung nichtionogene, kation- und/oder anionaktive Tenside mit guten Emulgier-,Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss-oder Tallöl gewonnen werden können. Ferner sind auch die Fettsäuremethyl-taurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxid-Adduktes und Phospholipide in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxid-Addukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykoleinheit 1 bis 5-Aethylenglykoleinheiten.

Als Beispiele nichtionischer Tenside seien Nonylphenolpolyäthoxyäthanole, Ricinusölpolyglycoläther, Ricinusölthioxilat, Polypropylen-Polyäthylenoxid-Addukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitantrioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)-äthylammoniumbromid.

Die in der Formulierungstechnik gebräuchlichen Tenside sind u.a. in folgenden Publikationen beschrieben:
"McCutcheon's Detergents and Emulsifiers Annual" MC Publishing Corp., Ridgewood, New Jersey, 1979;
Dr. Helmut Stache "Tensid Taschenbuch", Carl Hanser Verlag München/Wien 1981.

Die erfindungsgemäss verwendeten insektiziden Zubereitungen enthalten in der Regel 0,1 bis 99 %, insbesondere 0,1 bis 95 % des 2-[4-(3,5-Difluorphenoxy)-phenoxy]-äthylcarbaminsäure-äthylesters, 1 bis 99,9 % eines festen oder flüssigen Zusatzstoffes und 0 bis 25 %, insbesondere 0,1 bis 25 %, eines Tensides, wobei sich die %-Angaben auf das Gewicht beziehen. Während als Handelsware eher konzentrierte Mittel bevorzugt werden, verwendet der Endverbraucher in der Regel verdünnte Mittel bzw. Zubereitungen, die wesentlich geringere Wirkstoffkonzentrationen, wie z.B. 0,1 bis 1000 ppm, aufweisen. Gewöhnlich beträgt die eingesetzte Aufwandmenge des erfindungsgemäss zu verwendenden Wirkstoffes - insbesondere für landwirtschaftliche Kulturflächen - 0,025 bis 1,0 kg/ha, vorzugsweise 0,1 bis 0,5 kg/ha, beispielsweise 0,1 bis 0,25 kg/ha.

Die erwähnten Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Beispiel 1: Herstellung des 2-[4-(3,5-Difluorphenoxy)-phenoxy]-äthylcarbaminsäureäthylesters

Zu einer Lösung von 22,2 g 4-(3,5-Difluorphenoxy)-phenol in 80 ml Dimethylformamid werden 27,6 g feinpulveriges Kaliumcarbonat, 18,2 g 2-Chloräthylcarbaminsäureäthylester und 1 g gepulvertes Kaliumjodid hinzugefügt. Das Reaktionsgemisch wird unter Rühren während 16 Stunden auf 95° C erwärmt. Hierauf wird das Reaktionsgemisch filtriert, das Filtrat in 400 ml Wasser gegossen und wiederholt mit Diäthyläther extrahiert. Die vereinigten organischen Phasen werden mit Wasser gewaschen, über Natriumsulfat getrocknet und das Lösungsmittel wird abdestilliert. Der Rückstand wird über Kieselgel chromatographisch gereinigt (Eluierungsmittel: n-Hexan-Diäthyläther 3:1), wodurch der reine 2-[4(3,5-Difluorphenoxy)-phenoxy]-äthylcarbaminsäure-äthylester als farblose, alsbald kristallin erstarrende Verbindung vom Smp. 54-56° C erhalten wird. Das $^1$H-NMR-Spektrum steht mit der angegebenen Struktur in Einklang.

Beispiel 2: Kontakt-Wirkung gegen Bemisia tabaci

Eingetopfte Buschbohnen-Pflanzen (unbehandelt) werden mit Bemisia tabaci (Weisse Fliege) besiedelt (40 ungesexte Adulte pro Pflanze). Die Testtiere werden in Plastikzylindern an den Pflanzen gehalten. Nach erfolgter Eiablage während zwei Tagen werden alle vorhandenen Adulten entfernt. Zehn Tage nach Entfernung der Adulten, d.h. zu einem Zeitpunkt, an dem sich etwa 80 % der Nymphen im zweiten Nymphenstadium befinden, werden die besiedelten Pflanzen bis zur Tropfnässe mit einer wässrigen Emulsions-Zubereitung des zu prüfenden Wirkstoffes (Konzentration 10 ppm) besprüht. Die Auswertung erfolgt 14 Tage nach der Wirkstoff-Applikation auf %-Schlupfreduktion (= % Wirkung) im Vergleich zu unbehandelten Kontrollansätzen. Der Versuch wird in einem klimatisierten Raum bei 26° C, einer relativen Luftfeuchtigkeit von etwa 50 % und einer 14-stündigen Photoperiode (10'000 Lux) durchgeführt.

Der 2-[4-(3,5-Difluorphenoxy)phenoxy]-äthylcarbaminsäure-äthylester zeigt 100%ige Wirkung in diesem Test.

Beispiel 3: Wirkung gegen Aonidiella aurantii (Tauchtest - Kartoffelknollen)

Kleine Kartoffelknollen werden mit Wanderlarven ("crawlern") von Aonidiella aurantii (rote Citrus-Schildlaus) in der Weise infestiert, dass man die Kartoffeln während etwa 24 Stunden in direktem Kontakt mit stark von Aonodiella befallenen grossen Kürbissen hält, so dass schliesslich jede Kartoffel mit 200 bis 300 "crawlern" besiedelt wird. Wenn nach etwa zwei Wochen sich die Larven auf den Kartoffeln festgesetzt und zum ersten Mal gehäutet ($L_2$-Stadium) haben, werden die Kartoffeln für etwa 2 bis 3 Minuten mittels einer Zange in eine wässrige Emulsionszubereitung eingetaucht, die den zu prüfenden Wirkstoff in einer Konzentration von 10 ppm enthält. Nach dem Trocknen der so behandelten Kartoffelknollen werden diese während 10 bis 12 Wochen in Plastikbehälter gebracht, die im oberen Teil mit einem Leimring versehen sind, welcher zum Abfangen der geflügelten Männchen dient. Danach wird zur Auswertung der Zustand der behandelten Schildlaus-Population mit demjenigen von unbehandelten Kontrollansätzen verglichen, wobei auf die Anzahl der "crawler" der ersten Folgegeneration bonitiert wird (%-Wirkung).

Der Versuch wird in einem klimatisierten Raum bei 26 °C, 50 % relativer Luftfeuchtigkeit und einer 14-stündigen Photoperiode (10.000 Lux) durchgeführt.

Der 2-[4-(3,5-Difluorphenoxy)-phenoxy] -äthylcarbaminsäure-äthylesters zeigt 100%ige Wirkung in diesem Test.

Beispiel 4: Ovizide Wirkung auf Cydia pomonella, Adoxophyes reticulana und Lobesia botrana

Auf Papierstreifen abgelegte Eier der obigen Obstschädlinge, die nicht älter als 24 Stunden sind, werden so ausgeschnitten, dass pro ausgeschnittenem Papierstück ca. 50 Eier einer Schädlingsspezies vorhanden sind. Diese Papierstücke mit den Eiern werden nun dreimal für einige Sekunden in eine wässrige Emulsionszubereitung enthaltend 5 ppm des zu prüfenden Wirkstoffes eingetaucht. Nach dem Antrocknen der Test-Formulierung werden die Eier in Petrischalen (5 cm Durchmesser) ausgelegt und bei einer Temperatur von etwa 26 °C, 80 % relativer Luftfeuchtigkeit und einer Photoperiode von 14 Stunden (ca. 2000 Lux) belassen. Im Falle von Cydia pomonella (Apfelwickler) werden die behandelten Eigelege zwischen zwei Papierrundfiltern in der Petrischale deponiert. Im Falle von Adoxophyes reticulana (Fruchtschalenwickler) und Lobesia botrana (Traubenwickler) werden die Eigelege zwischen zwei Stoffrundfiltern unter dem Deckel der Petrischale deponiert, deren Unterteil mit einer normalen Lepidopteren-Diät ausgegossen ist. Nach 6 Tagen wird der prozentuale Schlupf von Larven aus den behandelten Eiern gegenüber unbehandelten Kontrollansätzen bewertet (%-Schlupfreduktion).

Der 2-[4-(3,5-Difluorphenoxy)-phenoxy]-äthylcarbaminsäureäthylester zeigt gegen die genannten Schädlinge 80-100%ige Wirkung in obigem Test.

Beispiel 5: Insektizide Formulierungen für den Wirkstoff 2-[4-(3,5-Difluorphenoxy)-phenoxy]-äthylcarbaminsäure-äthylester (% = Gewichtsprozent)

| 1. Spritzpulver | a) | b) | c) |
|---|---|---|---|
| Wirkstoff | 20 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyäthylenglykoläther (7-8 Mol AeO) | - | 2 % | - |
| Hochdisperse Kieselsäure | 5 % | 10 % | 10 % |
| Kaolin | 67 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| 2. Emulsions-Konzentrat | a) | b) |
|---|---|---|
| Wirkstoff | 10 % | 10 % |
| Octylphenolpolyäthylenglykoläther (4-5 Mol AeO) | 3 % | - |
| Ca-Dodecylbenzolsulfonat | 3 % | - |
| Ricinusölpolyglykoläther (36 Mol AeO) | 4 % | - |
| Ricinusölthioxilat | - | 25 % |
| Cyclohexanon | 30 % | - |
| Butanol | - | 15 % |
| Xylolgemisch | 50 % | - |
| Essigester | - | 50 % |

Aus diesem Konzentrat können durch Verdünnen mit Wasser Emulsionen jeder gewünschten Konzentration hergestellt werden.

| 3. Stäubemittel | a) | b) |
|---|---|---|
| Wirkstoff | 5 % | 8 % |
| Talkum | 95 % | - |
| Kaolin | - | 92 % |

Man erhält anwendungsfertige Stäubemittel, indem der Wirkstoff mit dem Träger vermischt und auf einer geeigneten Mühle vermahlen wird.

| 4. Extruder Granulat | |
|---|---|
| Wirkstoff | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

| 5. Umhüllungs-Granulat | |
|---|---|
| Wirkstoff | 3 % |
| Polyäthylenglykol (MG 200) | 3 % |
| Kaolin | 94 % |

Der feingemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

| 6. Suspensions-Konzentrat | |
|---|---|
| Wirkstoff | 40 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37%ige wässrige Formaldehyd-Lösung | 0,2 % |
| Silikonöl in Form einer 75%igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

## Ansprüche

1. Verwendung des 2-[4-(3,5-Difluorphenoxy)-phenoxy]-äthylcarbaminsäureäthylesters zur Bekämpfung von pflanzenschädigenden Insekten der Familien Aleyrodidae, Diaspididae, Coccidae, Tortricidae und Olethreutidae.

2. Verwendung gemäss Anspruch 1 zur Bekämpfung von Insekten der Gattungen Bemisia, Trialeurodes, Aonidiella, Quadraspidiotus, Parlatoria, Saissetia, Coccus, Adoxophyes, Cydia und Lobesia.

3. Verwendung gemäss Anspruch 2 zur Bekämpfung von Bemisia tabaci, Trialeurodes vaporarium, Aonidiella aurantii, Quadraspidiotus perniciosus, Cydia pomonella, Adoxophyes reticulana und Lobesia botrana.

4. Verfahren zur Bekämpfung von pflanzenschädigenden Insekten der Familien Aleyrodidae, Diaspididae, Coccidae, Tortricidae und Olethreutidae, dadurch gekennzeichnet, dass man die Schädlinge bzw. deren verschiedene Entwicklungsstadien oder ihren Aufenthaltsort mit einer pestizid wirksamen Menge des 2-[4-(3,5-Di-fluorphenoxy)-phenoxy]-äthylcarbaminsäure-äthylesters oder mit einem Mittel enthaltend neben Zusatz-und Trägerstoffen eine pestizid wirksame Menge dieser Verbindung, in Kontakt bringt oder behandelt.

5. Verfahren gemäss Anspruch 4 zur Bekämpfung von Insekten der Gattungen Bemisia, Trialeurodes, Aonidiella, Quadraspidiotus, Parlatoria, Saissetia, Coccus, Adoxophyes, Cydia und Lobesia.

6. Verfahren gemäss Anspruch 5 zur Bekämpfung von Bemisia tabaci, Trialeurodes vaporarium, Aonidiella aurantii, Quadraspidiotus perniciosus, Cydia pomonella, Adoxophyes reticulana und Lobesia botrana.

Europäisches Patentamt

# EUROPÄISCHER RECHERCHENBERICHT

Nummer der Anmeldung

EP 90810224.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | US - A - 4 608 389 (KISIDA et al.) * Ansprüche 4-15 * | 1,4 | A 01 N 47/12<br>A 01 N 47/10 |
| D,A | EP - A1 - 0 004 334 (F.HOFFMANN-LA ROCHE & CO) * Zusammenfassung; Seiten 7,8 * | 1,4 | |
| D,A | GB - A - 2 084 574 (F.HOFFMANN-LA ROCHE & CO) * Zusammenfassung; Seite 3, Zeilen 1-32 * | 1,4 | |

RECHERCHIERTE SACHGEBIETE (Int. Cl.5)

A 01 N

Der vorliegende Recherchenbericht wurde für alle Patentansprüche erstellt.

| Recherchenort | Abschlußdatum der Recherche | Prüfer |
|---|---|---|
| WIEN | 15-06-1990 | SCHNASS |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82